# EUROPEAN PATENT APPLICATION

(11) **EP 4 845 221 A1**
(43) Date of publication of application: **25.11.2026**
(21) Application number: 25751511.4
(22) Date of filing: 05.02.2025
(51) Int. Cl.: H04W 36/00

(54) **COMMUNICATION METHOD, COMMUNICATION APPARATUS, AND COMMUNICATION SYSTEM**

(30) Priority: 08.02.2024 CN 202410177332
(71) Applicant: Huawei Technologies Co., Ltd., Shenzhen, Guangdong 518129 (CN)
(72) Inventor: ZHANG, Haisen, Shenzhen, Guangdong 518129 (CN); LONG, Yi, Shenzhen, Guangdong 518129 (CN); ABDI ABYANEH, Mohammad, Shenzhen, Guangdong 518129 (CN); ZHANG, Li, Shenzhen, Guangdong 518129 (CN); CHEN, Lei, Shenzhen, Guangdong 518129 (CN)
(74) Representative: Huawei European IPR
(86) International application number: PCT/CN2025/075790
(87) International publication number: WO 2025/167912

(57) **Abstract**

This application provides a communication method, a communication apparatus, and a communication system. The method includes: receiving first system information of a first cell, where the first system information includes a first inter-frequency carrier frequency list, the first inter-frequency carrier frequency list includes cell reselection information of at least one second cell, and a spectrum of the second cell is less than a threshold; and performing measurement based on the first inter-frequency carrier frequency list. In this solution, when an inter-frequency neighboring cell of the first cell includes the second cell, the second cell is an inter-frequency neighboring cell of the first cell, and the spectrum of the second cell is less than the threshold, a network device includes the cell reselection information of the second cell in the first system information for transmission. In this way, a terminal device may obtain the cell reselection information of the second cell by receiving the first system information, and further perform measurement based on the cell reselection information of the second cell, thereby implementing cell reselection.

## Description

### CROSS-REFERENCE TO RELATED APPLICATIONS

This application claims priority to Chinese Patent Application No. 202410177332.0, filed with the China National Intellectual Property Administration on February 8, 2024 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

In current new radio (new radio, NR) systems, the spectrum (namely, the bandwidth or frequency band) of a cell is generally large, for example, greater than or equal to a threshold, where the threshold is, for example, 5 megahertz (MHz).

However, in emerging application scenarios, the spectrum with a smaller bandwidth, for example, less than the foregoing threshold, are being introduced. Such a smaller spectrum may be, for example, 3 MHz or 3.6 MHz.

After the introduction of smaller spectra, if an inter-frequency neighboring cell of a given cell operates on such a smaller spectrum, how to notify a terminal device of cell reselection information of the inter-frequency neighboring cell needs to be resolved.

### SUMMARY

Embodiments of this application provide a communication method, a communication apparatus, and a communication system, configured to notify a terminal device of cell reselection information of an inter-frequency neighboring cell operating on a smaller spectrum.

According to a first aspect, an embodiment of this application provides a communication method. The method may be performed by a terminal device or a module (for example, a chip) in a terminal device. The method includes: receiving first system information of a first cell, where the first system information includes a first inter-frequency carrier frequency list, the first inter-frequency carrier frequency list includes cell reselection information of at least one second cell, the second cell is an inter-frequency neighboring cell of the first cell, and a spectrum of the second cell is less than a threshold; and performing measurement based on the first inter-frequency carrier frequency list.

In the foregoing solution, when an inter-frequency neighboring cell of the first cell includes the second cell, the second cell is an inter-frequency neighboring cell of the first cell, and the spectrum of the second cell is less than the threshold, a network device includes the cell reselection information of the second cell in the first system information for transmission. In this way, the terminal device may obtain the cell reselection information of the second cell by receiving the first system information, and further perform measurement based on the cell reselection information of the second cell, thereby implementing cell reselection.

In a possible implementation, the first system information further includes a second inter-frequency carrier frequency list, the second inter-frequency carrier frequency list includes cell reselection information of at least one third cell, the third cell is an inter-frequency neighboring cell of the first cell, a spectrum of the third cell is greater than or equal to the threshold, and the cell reselection information of the at least one third cell is invalid information.

In the foregoing solution, the first system information may carry the first inter-frequency carrier frequency list and the second inter-frequency carrier frequency list, and the cell reselection information of the at least one third cell in the second inter-frequency carrier frequency list is invalid information. The terminal device may identify that the cell reselection information of the at least one third cell in the second inter-frequency carrier frequency list is invalid information, and therefore, skips measurement based on the second inter-frequency carrier frequency list and performs measurement based only on the first inter-frequency carrier frequency list. When the first system information is a SIB4, in this solution, compatibility with the SIB4 in conventional technologies is implemented, and there is no need to introduce an additional SIB for sending the first inter-frequency carrier frequency list, thereby reducing signaling overhead.

In a possible implementation, the method further includes: skipping measurement based on the second inter-frequency carrier frequency list; or ignoring the second inter-frequency carrier frequency list.

In a possible implementation, the method further includes: determining, based on information about a first field in the cell reselection information of the at least one third cell, that the cell reselection information of the at least one third cell is invalid information.

In the foregoing solution, the invalid information is filled in the first field, so that the terminal device determines, by identifying the invalid information, that the second inter-frequency carrier frequency list is invalid. This solution is simple and easy to implement.

In a possible implementation, the first field includes one or more of the following fields: a band list, a downlink carrier frequency, a synchronization signal block (synchronization signal block, SSB) subcarrier spacing, a minimum access quality level of a cell, a cell reselection delay, a high-priority reselection threshold, or a low-priority reselection threshold.

In a possible implementation, the method further includes: determining, when it is determined that the cell reselection information of the at least one third cell includes information about the first cell, that the cell reselection information of the at least one third cell is invalid information.

In the foregoing solution, the information about the first cell is added to the second inter-frequency carrier frequency list, so that the terminal device determines, based on the information about the first cell, that the second inter-frequency carrier frequency list is invalid. This solution is simple and easy to implement.

In a possible implementation, the method further includes: receiving second system information of the first cell, where the second system information includes a third inter-frequency carrier frequency list, the third inter-frequency carrier frequency list includes cell reselection information of at least one third cell, the third cell is an inter-frequency neighboring cell of the first cell, and a spectrum of the third cell is greater than or equal to the threshold; and performing measurement based on the third inter-frequency carrier frequency list.

In the foregoing solution, the first inter-frequency carrier frequency list and the third inter-frequency carrier frequency list are respectively carried in different pieces of system information, and the terminal device may perform measurement based on the first inter-frequency carrier frequency list and perform measurement based on the third inter-frequency carrier frequency list. In this solution, a SIB4 in conventional technologies is not changed. The SIB4 is used to send the third inter-frequency carrier frequency list, and only another SIB needs to be introduced for sending the first inter-frequency carrier frequency list. Therefore, cell reselection information of inter-frequency neighboring cells of different types is sent in different SIBs, thereby avoiding incorrect identification by the terminal device, and helping the terminal device accurately identify the cell reselection information of inter-frequency neighboring cells of different types.

In a possible implementation, the threshold is 5 MHz.

In a possible implementation, the first system information is a SIB4.

According to a second aspect, an embodiment of this application provides a communication method. The method may be performed by a network device or a module (for example, a chip) in a network device. The method includes: determining first system information of a first cell, where the first system information includes a first inter-frequency carrier frequency list, the first inter-frequency carrier frequency list includes cell reselection information of at least one second cell, the second cell is an inter-frequency neighboring cell of the first cell, and a spectrum of the second cell is less than a threshold; and sending the first system information.

In the foregoing solution, when an inter-frequency neighboring cell of the first cell includes the second cell, the second cell is an inter-frequency neighboring cell of the first cell, and the spectrum of the second cell is less than the threshold, the network device includes the cell reselection information of the second cell in the first system information for transmission. In this way, a terminal device may obtain the cell reselection information of the second cell by receiving the first system information, and further perform measurement based on the cell reselection information of the second cell, thereby implementing cell reselection.

In a possible implementation, the first system information further includes a second inter-frequency carrier frequency list, the second inter-frequency carrier frequency list includes cell reselection information of at least one third cell, the third cell is an inter-frequency neighboring cell of the first cell, a spectrum of the third cell is greater than or equal to the threshold, and the cell reselection information of the at least one third cell is invalid information.

In the foregoing solution, the first system information may carry the first inter-frequency carrier frequency list and the second inter-frequency carrier frequency list, and the cell reselection information of the at least one third cell in the second inter-frequency carrier frequency list is invalid information. The terminal device may identify that the cell reselection information of the at least one third cell in the second inter-frequency carrier frequency list is invalid information, and therefore, skips measurement based on the second inter-frequency carrier frequency list and performs measurement based only on the first inter-frequency carrier frequency list. When the first system information is a SIB4, in this solution, compatibility with the SIB4 in conventional technologies may be implemented, and there is no need to introduce an additional SIB for sending the first inter-frequency carrier frequency list, thereby reducing signaling overhead.

In a possible implementation, the cell reselection information of the at least one third cell includes information about a first field, and the information about the first field indicates that the cell reselection information of the third cell is invalid information.

In the foregoing solution, the invalid information is filled in the first field, so that the terminal device determines, by identifying the invalid information, that the second inter-frequency carrier frequency list is invalid. This solution is simple and easy to implement.

In a possible implementation, the first field includes one or more of the following fields: a band list, a downlink carrier frequency, an SSB subcarrier spacing, a minimum access quality level of a cell, a cell reselection delay, a high-priority reselection threshold, or a low-priority reselection threshold.

In a possible implementation, the invalid information includes information about the first cell.

In the foregoing solution, the information about the first cell is added to the second inter-frequency carrier frequency list, so that the terminal device determines, based on the information about the first cell, that the second inter-frequency carrier frequency list is invalid. This solution is simple and easy to implement.

In a possible implementation, the method further includes: determining second system information of the first cell, where the second system information includes a third inter-frequency carrier frequency list, the third inter-frequency carrier frequency list includes cell reselection information of at least one third cell, the third cell is an inter-frequency neighboring cell of the first cell, and a spectrum of the third cell is greater than or equal to the threshold; and sending the second system information.

In the foregoing solution, the first inter-frequency carrier frequency list and the third inter-frequency carrier frequency list are respectively carried in different pieces of system information, and the terminal device may perform measurement based on the first inter-frequency carrier frequency list and perform measurement based on the third inter-frequency carrier frequency list. In this solution, a SIB4 in conventional technologies is not changed. The SIB4 is used to send the third inter-frequency carrier frequency list, and only another SIB needs to be introduced for sending the first inter-frequency carrier frequency list. Therefore, cell reselection information of inter-frequency neighboring cells of different types is sent in different SIBs, thereby avoiding incorrect identification by the terminal device, and helping the terminal device accurately identify the cell reselection information of inter-frequency neighboring cell of different types.

In a possible implementation, the threshold is 5 MHz.

In a possible implementation, the first system information is a SIB4.

According to a third aspect, an embodiment of this application provides a communication apparatus. The apparatus may be a terminal device or a module (for example, a chip) in a terminal device. The apparatus has a function of implementing any one of the implementations in the first aspect. The function may be implemented by hardware, or may be implemented by hardware executing corresponding software. The hardware or the software includes one or more modules corresponding to the foregoing function.

According to a fourth aspect, an embodiment of this application provides a communication apparatus. The apparatus may be a network device, or may be a module (for example, a chip) in a network device. The apparatus has a function of implementing any one of the implementations in the second aspect. The function may be implemented by hardware, or may be implemented by hardware executing corresponding software. The hardware or the software includes one or more modules corresponding to the foregoing function.

According to a fifth aspect, an embodiment of this application provides a communication apparatus, including a unit or a means configured to perform steps in any one of the implementations in the first aspect and the second aspect.

According to a sixth aspect, an embodiment of this application provides a communication apparatus, including one or more processors and one or more interface circuits. The processor is configured to communicate with another apparatus through the interface circuit, and perform any one of the implementations in the first aspect and the second aspect. There are one or more processors.

Optionally, the communication apparatus may further include one or more memories configured to store computer instructions. The one or more memories are coupled to one or more processors. The processor executes the computer instructions stored in the memories, so that the apparatus performs any one of the implementations in the first aspect and the second aspect.

According to a seventh aspect, an embodiment of this application further provides a computer program product. The computer program product includes a computer program or instructions, and when the computer program or the instructions are run by a communication apparatus, any one of the implementations in the first aspect and the second aspect is performed.

According to an eighth aspect, an embodiment of this application further provides a computer-readable storage medium. The computer-readable storage medium stores instructions, and when the instructions are run on a communication apparatus, any one of the implementations of the first aspect is performed.

According to a ninth aspect, an embodiment of this application further provides a chip or a chip system, including one or more processors, configured to perform any one of the implementations in the first aspect and the second aspect.

According to a tenth aspect, an embodiment of this application further provides a communication system. The system includes a terminal device configured to perform the method in any one of the implementations in the first aspect and a network device configured to perform the method in any one of the implementations in the second aspect.

### BRIEF DESCRIPTION OF DRAWINGS

FIG. 1(a) is a diagram of an architecture of a communication system to which an embodiment of this application is applied;
FIG. 1(b) is a diagram of a network device;
FIG. 2 is a diagram of an example of frequency bands for an R-GSM;
FIG. 3 is a schematic flowchart of a communication method according to an embodiment of this application;
FIG. 4 is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

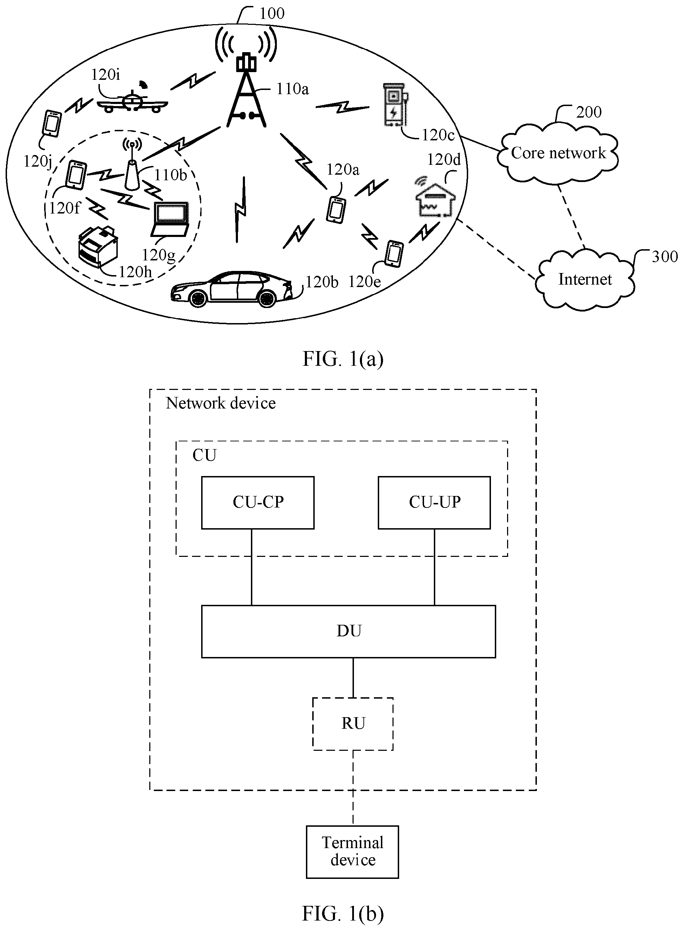

FIG. 1(a) is a diagram of an architecture of a communication system to which an embodiment of this application is applied. A communication system shown in FIG. 1(a) includes a radio access network 100 and a core network 200. Optionally, the communication system further includes an internet 300. The radio access network 100 may include at least one network device (for example, 110a and 110b in FIG. 1(a)), and may further include at least one terminal device (for example, 120a to 120j in FIG. 1(a)). The terminal device is connected to the network device in a wireless manner, and the network device is connected to the core network in a wireless or wired manner. A core network device and the network device may be different physical devices that are independent of each other, functions of the core network device and logical functions of the network device may be integrated into the same physical device, or a part of functions of the core network device and a part of functions of the network device may be integrated into one physical device. Terminal devices may be connected to each other and network devices may be connected to each other in a wired or wireless manner. FIG. 1(a) is only a diagram. The communication system may further include other network devices, for example, a wireless relay device and a wireless backhaul device, which are not shown in FIG. 1(a).

The network device is an access device used by the terminal device to access the communication system in a wired or wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes a part of functions of the base station, for example, may be a central unit (central unit, CU), may be a distributed unit (distributed unit, DU), or may be a radio unit (radio unit, RU). The network device may be a macro base station (for example, 110a in FIG. 1(a)), may be a micro base station or an indoor base station (for example, 110b in FIG. 1(a)), or may be a relay node, a donor node, or the like. A specific technology and a specific device form that are used by the network device are not limited in embodiments of this application.

The terminal device is a device having a wireless transceiver function, and may send a signal to the network device, or receive a signal from the network device. The terminal device includes but is not limited to a terminal apparatus, a terminal, user equipment (user equipment, UE), a mobile station, a mobile terminal, and the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal device may be specifically a mobile phone, a tablet computer, a computer having a wireless transceiver function, a wearable device, a vehicle, an airplane, a ship, a robot, a robot arm, a smart home device, or the like. A specific technology and a specific device form that are used by the terminal device are not limited in embodiments of this application.

The network device and the terminal device may be at fixed locations, or may be movable. The network device and the terminal device may be deployed on land, including indoor devices, outdoor devices, handheld devices, or vehicle-mounted devices; may be deployed on water; or may be deployed on an airplane, a balloon, a train, a light rail, a high-speed railway, or a man-made satellite. Application scenarios of the network device and the terminal device are not limited in embodiments of this application.

Roles of the network device and the terminal device may be relative. For example, a helicopter or an unmanned aerial vehicle 120i in FIG. 1(a) may be configured as a mobile network device. For the terminal device 120j that accesses the radio access network 100 through 120i, the terminal device 120i is a network device. However, for the network device 110a, 120i is a terminal device, that is, 110a and 120i communicate with each other by using a radio air interface protocol. Certainly, 110a and 120i may alternatively communicate with each other by using an interface protocol between the network devices. In this case, compared with 110a, 120i is also a network device. Therefore, both the network device and the terminal device may be collectively referred to as communication apparatuses. 110a and 110b in FIG. 1(a) may be referred to as communication apparatuses having a function of the network device, and 120a to 120j in FIG. 1(a) may be referred to as communication apparatuses having a function of the terminal device.

Communication may be performed between the network device and the terminal device, between network devices, or between terminal devices by using a licensed spectrum, an unlicensed spectrum, or both a licensed spectrum and an unlicensed spectrum. Communication may be performed by using a spectrum below 6 gigahertz (gigahertz, GHz), a spectrum above 6 GHz, or both a spectrum below 6 GHz and a spectrum above 6 GHz. A spectrum resource for wireless communication is not limited in embodiments of this application.

In this embodiment of this application, the function of the network device may alternatively be performed by a module (for example, a chip) in the network device, or may be performed by a control subsystem having the function of the network device. The control subsystem having the function of the network device may be a control center in the foregoing application scenarios such as the smart grid, the industrial control, the smart transportation, and the smart city. The function of the terminal device may alternatively be performed by a module (for example, a chip or a modem) in the terminal device, or may be performed by an apparatus having the function of the terminal device.

In this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection to a cell controlled by the network device. The cell that establishes the wireless connection to the terminal device is referred to as a serving cell of the terminal device.

FIG. 1(b) is a diagram of a network device. As shown in FIG. 1(b), the network device includes one or more CUs and one or more DUs, and optionally includes one or more RUs. For clarity, FIG. 1(b) only shows one CU, one DU, and one RU. The CU is configured to connect to a core network and the one or more DUs. Optionally, the CU may have a part of functions of the core network. The CU may include a CU-control plane (control plane, CP) and a CU-user plane (user plane, UP). The RU may be disposed inside the DU, or may be disposed independently of the CU and the DU. When the RU is disposed inside the DU, it may also be understood that the network device does not include the RU. In other words, the network device includes one or more CUs and one or more DUs, and the DU may implement a function of the RU.

The CU and the DU may be configured based on functions of protocol layers of a wireless network that are implemented by the CU and the DU. For example, the CU is configured to implement functions of a packet data convergence protocol (packet data convergence protocol, PDCP) layer and a protocol layer above the PDCP layer (for example, a radio resource control (radio resource control, RRC) layer and/or a service data adaptation protocol (service data adaptation protocol, SDAP) layer), and the DU is configured to implement functions of a protocol layer below the PDCP layer (for example, a radio link control (radio link control, RLC) layer, a medium access control (medium access control, MAC) layer, and/or a physical (physical, PHY) layer). For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

The foregoing configurations of the CU and the DU are merely examples. Alternatively, functions of the CU and the DU may be configured as needed. For example, the CU or the DU may be configured to have functions of more protocol layers, or the CU or the DU may be configured to have a part of processing functions of protocol layers. For example, some functions of the RLC layer and a function of a protocol layer above the RLC layer are set on the CU, and remaining functions of the RLC layer and a function of a protocol layer below the RLC layer are set on the DU. For another example, division into functions of the CU or the DU may be performed based on service types or other system requirements. For example, division may be performed based on a delay. Functions whose processing time needs to meet a requirement for a small delay are set on the DU, and functions whose processing time does not need to meet the requirement for the delay are set on the CU.

The DU and the RU may work together to implement a function of the PHY layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of functions of the physical layer, where the part of functions is closer to the MAC layer. The lower-layer function of the physical layer may include another part of functions of the physical layer, where the part of functions is closer to an intermediate radio frequency side.

The CU and the DU may be separately disposed, or may be included in the same network element, for example, in a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). In different systems, the CU, the DU, or the RU may also have different names, but a person skilled in the art may understand meanings thereof. For example, in an open radio access network (open radio access network, ORAN) system, a CU may also be referred to as an O-CU (open CU), a DU may also be referred to as an O-DU, and an RU may also be referred to as an O-RU. Any unit of the CU (or the CU-CP and the CU-UP), the DU, and the RU in this application may be implemented by using a software module, a hardware module, or a combination of a software module and a hardware module.

For ease of understanding of content of the present invention, the following describes terms used in the present invention.

### 1. System information (system information, SI)

The system information is information broadcast in cells of network devices in a mobile network. One network device may serve one or more cells, and spectra of cells served by the same network device may be the same or may be different. Spectra of cells served by different network devices may be the same or may be different.

A terminal device obtains, by receiving the system information, at least one of the following information: basic information required for cell selection during initial access to a network, a parameter for intra-frequency cell reselection, a parameter for inter-frequency cell reselection, a parameter for inter-RAT cell reselection, or commercial mobile alert service (Commercial Mobile Alert Service, CMAS) alert information. Inter-RAT means that radio access technologies (radio access technologies, RATs) are different. For example, 4G and 5G are inter-RAT.

The system information is classified into two categories based on content: minimum system information (Minimum SI, MSI) and other system information (Other SI, OSI).

The MSI includes a master information block (Master Information Block, MIB) and a system information block 1 (System Information Block 1, SIB1). The MIB includes most basic information such as whether access to a cell is barred and location information of the SIB1 that are provided for the terminal device. The SIB1 includes information related to cell access and scheduling information of another SIB that are provided for the terminal device. The SIB1 may also be referred to as remaining minimum system information (Remaining Minimum System Information, RMSI).

The OSI includes a SIB2 to a SIBn, and is used to provide the terminal device with at least one of mobility, time, earthquake and tsunami warning system (Earthquake and Tsunami Warning System, ETWS) information, or CMAS alert information.

The SIB2 provides the terminal device with common information required for intra-frequency cell reselection, inter-frequency cell reselection, and inter-RAT cell reselection.

The SIB3 provides the terminal device with information related to intra-frequency reselection, for example, including an intra-frequency cell reselection parameter and an intra-frequency excluded cell list. An intra-frequency cell herein and a camped-on cell or a serving cell of the terminal device may belong to the same network device or different network devices.

The SIB4 provides the terminal device with information related to inter-frequency reselection, for example, including a parameter for inter-frequency reselection, a parameter for inter-frequency cell reselection, and an inter-frequency excluded cell list. An inter-frequency cell herein and the camped-on cell or the serving cell of the terminal device may belong to the same network device or different network devices.

The SIB5 provides the terminal device with information related to inter-RAT reselection, for example, including a parameter for inter-RAT frequency reselection, a parameter for inter-RAT cell reselection, and an inter-RAT excluded cell list.

The SIB8 provides the terminal device with CMAS alert information.

The SIB9 provides the terminal device with information related to time, where the information is used by the terminal device to synchronize time. For example, the SIB9 provides high-precision time information, specifically including at least one of coordinated universal time (coordinated universal time, UTC), global positioning system (global positioning system, GPS) time, or local time.

### 2. SIB4

In a 5G wireless network, the SIB4 belongs to OSI, and may be periodically sent as defined in a SIB1 message, or may be separately sent by a network device for a terminal device based on a request of the terminal device.

The SIB4 includes an inter-frequency carrier frequency list (interFreqCarrierFreqList), and interFreqCarrierFreqList includes one or more pieces of inter-frequency carrier frequency information (InterFreqCarrierFreqInfo).

For example, the following provides an example of content included in InterFreqCarrierFreqInfo.

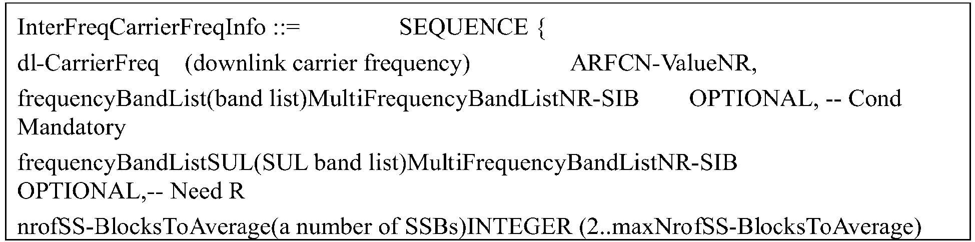

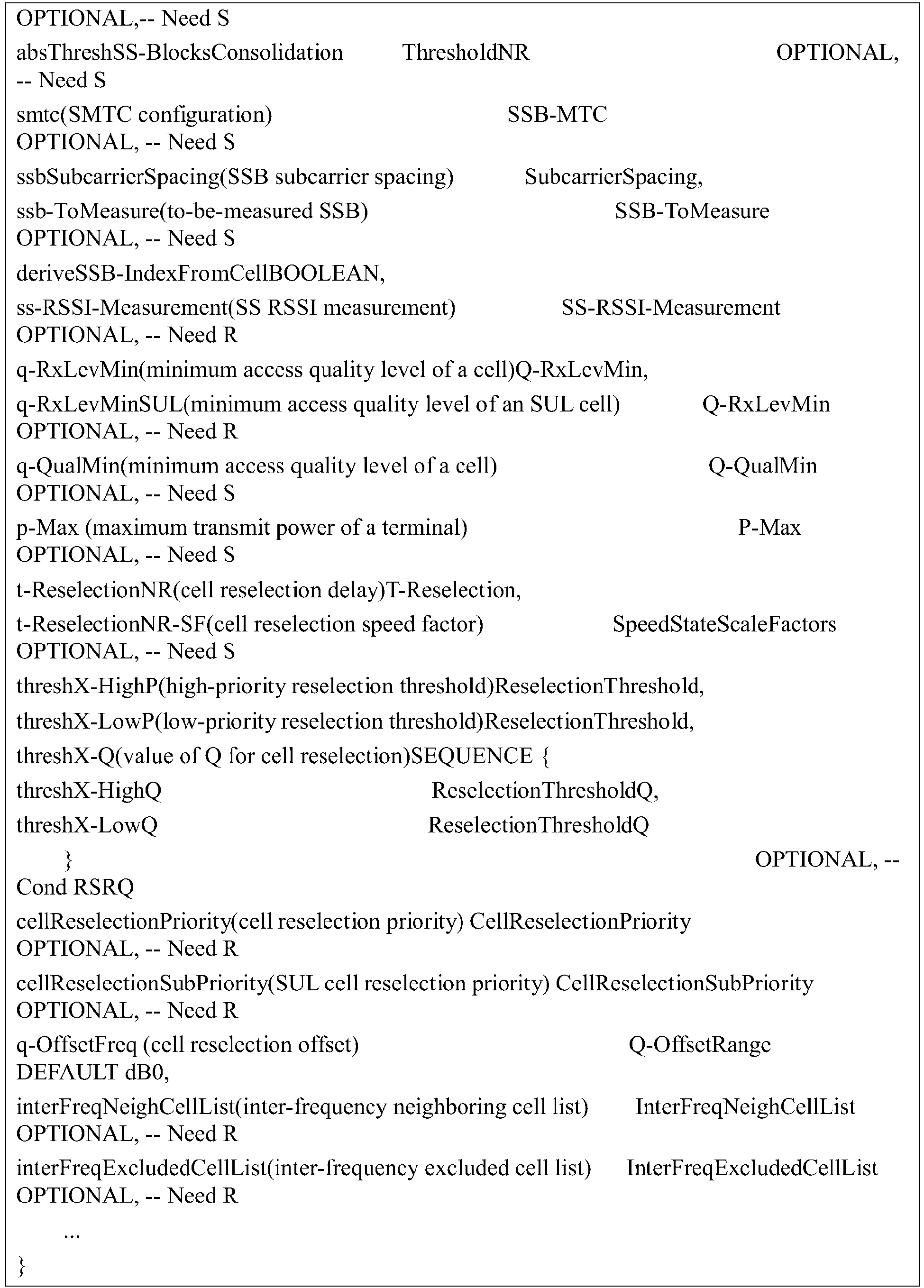

The following fields in InterFreqCarrierFreqInfo indicate parameters for neighboring cell frequency and synchronization signal block (synchronization signal block, SSB) measurement: dl-CarrierFreq, frequencyBandList, frequencyBandListSUL, nrofSS-BlocksToAverage, absThreshSS-BlocksConsolidation, smtc, ssbSubcarrierSpacing, ssb-ToMeasure, deriveSSB-IndexFromCell, ss-RSSI-Measurement, q-OffsetFreq, interFreqNeighCellList, and interFreqExcludedCellList.

The following fields in InterFreqCarrierFreqInfo indicate neighboring cell access quality threshold parameters for reselection: q-RxLevMin, q-RxLevMinSUL, q-QualMin, p-Max, t-ReselectionNR, t-ReselectionNR-SF, threshX-HighP, threshX-LowP, threshX-Q, threshX-HighQ, threshX-LowQ, cellReselectionPriority, and cellReselectionSubPriority.

It should be noted that, some fields in the foregoing code may be mandatory parameters, and some fields in the foregoing code may be optional parameters. The mandatory parameter is a parameter that needs to be carried in a SIB4 when the network device sends the SIB4 of a cell. For example, in an example, dl-CarrierFreq, frequencyBandList, ssbSubcarrierSpacing, q-RxLevMin, t-ReselectionNR, threshX-HighP, and threshX-LowP are mandatory fields, and the other fields are optional fields.

### 3. Narrowband new radio (Narrowband new radio, NB-NR) and narrowband private network (NB private network)

Support for NB-NR is currently under discussion in 3GPP standard meetings. Main application scenarios of NB-NR are some private network scenarios, such as a railway-global system for mobile communications (Railway-Global System for Mobile Communications, R-GSM). The R-GSM provides secure, reliable, and efficient connections for railway scenarios, improving passenger experience.

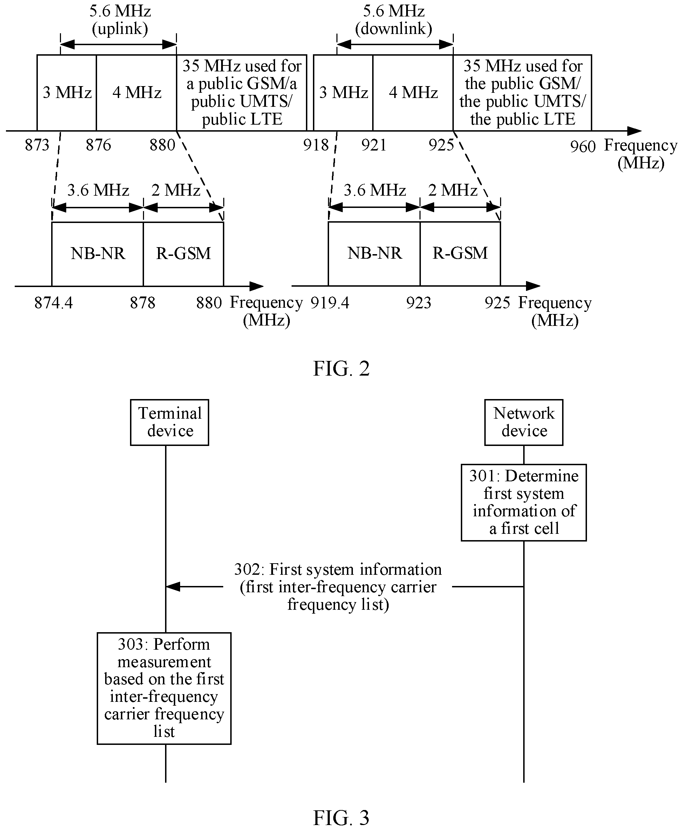

The R-GSM is allocated with some dedicated frequency bands. FIG. 2 is a diagram of an example of frequency bands for an R-GSM. In an example, two 3 megahertz (MHz) frequency bands are allocated to the R-GSM for uplink and downlink transmission, where a range of the 3 MHz frequency band used for uplink transmission is 873 MHz to 876 MHz, and a range of the 3 MHz frequency band used for downlink transmission is 918 MHz to 921 MHz. In another example, two 4 MHz frequency bands are allocated to the R-GSM for uplink and downlink transmission, where a range of the 4 MHz frequency band used for uplink transmission is 876 MHz to 880 MHz, and a range of the 4 MHz frequency band used for downlink transmission is 921 MHz to 925 MHz.

The following provides example implementations for the R-GSM to support both NB-NR transmission and private network transmission. In an example, in a scenario in which the two 3 MHz frequency bands are allocated to the R-GSM, a part of the 873 MHz to 876 MHz frequency band may be used for uplink NB-NR transmission, the other part of the 873 MHz to 876 MHz frequency band may be used for uplink private network transmission, a part of the 918 MHz to 921 MHz frequency band may be used for downlink NB-NR transmission, and the other part of the 918 MHz to 921 MHz frequency band may be used for downlink private network transmission. In another example, in a scenario in which the two 4 MHz frequency bands are allocated to the R-GSM, a part of the 876 MHz to 880 MHz frequency band may be used for uplink NB-NR transmission, the other part of the 876 MHz to 880 MHz frequency band may be used for uplink private network transmission, a part of the 921 MHz to 925 MHz frequency band may be used for downlink NB-NR transmission, and the other part of the 921 MHz to 925 MHz frequency band may be used for downlink private network transmission. Alternatively, in another example, the foregoing two examples may be combined, and frequency bands used for NB-NR transmission and private network transmission are reallocated. Refer to FIG. 2. In an example, a 874.4 MHz to 878 MHz frequency band may be used for uplink NB-NR transmission, a 878 MHz to 880 MHz frequency band may be used for uplink private network transmission, a 919.4 MHz to 923 MHz frequency band may be used for downlink NB-NR transmission, and a 923 MHz to 925 MHz frequency band may be used for downlink private network transmission.

In the example in FIG. 2, in addition to the frequency bands for the R-GSM, some frequency bands used for common transmission are further included. For example, a 880 MHz to 915 MHz frequency band is used for uplink common transmission of a public global system for mobile communications (Global System for Mobile Communications, GSM)/a public universal mobile telecommunications system (Universal Mobile Telecommunications System, UMTS)/public long term evolution (long term evolution, LTE), and a 925 MHz to 960 MHz frequency band is used for downlink common transmission of the public GSM/the public UMTS/the public LTE.

It should be noted that, the foregoing uses the R-GSM private network scenario as an example to describe possible implementations in which NB-NR transmission is newly supported. During actual application, NB-NR transmission may also be newly supported in another private network scenario. For example, in the another private network scenario, dedicated narrow frequency bands owned by some private network operators, for example, two 3 MHz frequency bands in the 900 MHz FDD frequency band allocated nationwide support NB-NR transmission. For another example, in the another private network scenario, dedicated narrow frequency bands owned by a public protection and disaster relief (Public Protection and Disaster Relief, PPDR) application, for example, a part of narrow frequency bands in the 700 MHz FDD frequency band allocated nationwide support NB-NR transmission.

In current NR transmission, an allocated frequency band is generally greater than or equal to 5 MHz. However, in the foregoing examples, because both NR transmission and private network transmission are supported on one frequency band, a frequency band used for NR transmission and a frequency band used for private network transmission are generally narrow. For example, a frequency band used for NB-NR transmission is generally less than 5 MHz in normal NR transmission. For example, the frequency band used for NB-NR transmission may fall within x MHz to 5 MHz, where x is approximately equal to 3 MHz. For example, the frequency band used for NB-NR transmission may be specifically 2.9 MHz, 3 MHz, 3.6 MHz, or the like.

For ease of description, in this application, in a frequency band that supports both NR transmission and private network transmission, a frequency band used for NR transmission is referred to as an NB-NR frequency band, and a frequency band used for private network transmission is referred to as an NB private network frequency band.

In embodiments of this application, a frequency band is also referred to as a spectrum, a bandwidth, a band, a spectral band, a frequency domain length, a frequency range, or the like. This is uniformly described herein.

In embodiments of this application, one frequency corresponds to one carrier, a plurality of frequencies form one frequency band, and each cell corresponds to one carrier. For example, in 5G, for a frequency band: C-band, frequencies are spaced at interval of 5 M, 10 M, 15 M, 20 M, ..., or 100 M; and for a millimeter wave, frequencies are spaced at intervals of 100 M, 200 M, or 400 M. The 5 M, 10 M, 15 M, 20 M, ..., and 100 M are all standard frequency bands (or standard bandwidths), and the 100 M, 200 M, and 400 M are also standard frequency bands (or standard bandwidths).

After a smaller spectrum (for example, the NB-NR spectrum) is introduced, if a spectrum of an inter-frequency neighboring cell of a cell is the smaller spectrum, how to notify a terminal device of cell reselection information of the inter-frequency neighboring cell needs to be resolved.

To resolve this problem, this application provides corresponding embodiments. The following provides detailed descriptions.

FIG. 3 is a schematic flowchart of a communication method according to an embodiment of this application. The method is performed by a network device or a module (for example, a chip) in a network device, and a terminal device or a module (for example, a chip) in a terminal device. The following uses an example in which the network device and the terminal device performs the method for description.

The method includes the following steps.

Step 301: The network device determines first system information of a first cell.

The first system information includes a first inter-frequency carrier frequency list, the first inter-frequency carrier frequency list includes cell reselection information of at least one second cell, a spectrum of the second cell is less than a threshold, and the second cell is an inter-frequency neighboring cell of the first cell. The second cell is a cell other than the first cell. For example, the threshold is 5 MHz.

In this embodiment of this application, the second cell may also be referred to as a first-type cell, the first-type cell is an inter-frequency neighboring cell of the first cell, and a spectrum of the first-type cell is less than the threshold. The second cell is also referred to as a dedicated cell, and the dedicated cell is a cell using a dedicated spectrum. This applies throughout and will not be repeated in other subsequent embodiments.

The spectrum of the second cell may fall within, for example, x MHz to 5 MHz, where x is approximately equal to 3 MHz. That is, the spectrum of the second cell falls within approximately 3 to 5 MHz. For example, the spectrum of the second cell may be specifically 2.9 MHz, 3 MHz, 3.6 MHz, or the like. For example, the first inter-frequency carrier frequency list includes one or more pieces of inter-frequency carrier frequency information (InterFreqCarrierFreqInfo), each piece of inter-frequency carrier frequency information includes inter-frequency carrier frequency information of one inter-frequency neighboring cell of the first cell, and the inter-frequency neighboring cell and the first cell may belong to the same network device or different network devices. For example, for a specific field in each piece of inter-frequency carrier frequency information, refer to the field setting in the foregoing InterFreqCarrierFreqInfo. For example, the inter-frequency carrier frequency information includes dl-CarrierFreq, frequencyBandList, and the like. Details are not described again.

In addition, the second cell may alternatively be a cell with an irregular channel bandwidth, for example, cells corresponding to different channel bandwidths (for example, 6 MHz, 7 MHz, 11 MHz, 12 MHz, and 13 MHz) corresponding to different bands (bands) in the following Table 1. The bandwidths of the cells are generally greater than the threshold (for example, 5 MHz), but the spectra of the cells are requirements proposed by an operator, and are not standard cell bandwidths defined in an existing protocol. The terminal device can communicate with the cells only by using a specific method. That is, the terminal device needs to be upgraded to support the cell of this type. In other words, the terminal device can communicate with the cell of this type only when having a capability of supporting a cell with an irregular bandwidth. The spectrum of the second cell of this type is not limited to be less than the threshold.

**Table 1**

| Band (Band(s)) | Channel bandwidth (Channel Bandwidth(s)) |
|---|---|
| n5 | 7 MHz or 11 MHz |
| n12 or n85 | 6 MHz or 12 MHz |
| n26 | 7 MHzMHz |
| n28 | 13 MHz |
| n29 | 6 MHz or 11 MHz |

Step 302: The network device sends the first system information.

For example, the network device may broadcast, multicast, or unicast the first system information, or may send the first system information in another manner. A sending manner is not limited in this application.

For example, the network device sends the first system information in the first cell. The first cell is any cell belonging to the network device.

Step 303: The terminal device performs measurement based on the first inter-frequency carrier frequency list.

The terminal device receives the first system information of the first cell, obtains the first inter-frequency carrier frequency list from the first system information, and performs measurement based on cell reselection information of each second cell in the first inter-frequency carrier frequency list. Optionally, the performed measurement is inter-frequency measurement. If the terminal device obtains, through measurement, an inter-frequency neighboring cell that meets a condition, the terminal device may perform reselection to the inter-frequency neighboring cell.

For example, the terminal device may perform measurement, for example, for any piece of inter-frequency carrier frequency information in the first inter-frequency carrier frequency list. The inter-frequency carrier frequency information includes frequencyBandList, and frequencyBandList includes one or more bands (bands). The terminal device selects a 1^{st} band supported by the terminal device in frequencyBandList. If the band is not a band used only for downlink, the terminal device uses a p-Max parameter in the inter-frequency carrier frequency information, where p-Max may be used to determine whether the terminal device performs measurement, and/or is used by the terminal device to determine, after determining that measurement needs to be performed, whether to perform cell reselection.

When the terminal device is in an idle state, the first cell may be a camped-on cell of the terminal device. When the terminal device is in a connected state, the first cell may be a serving cell of the terminal device. That is, the first cell is the camped-on cell or the serving cell.

In the foregoing solution, when an inter-frequency neighboring cell of the first cell includes the second cell, the second cell is an inter-frequency neighboring cell of the first cell, and the spectrum of the second cell is less than the threshold, the network device includes the cell reselection information of the second cell in the first system information for transmission. In this way, the terminal device may obtain the cell reselection information of the second cell by receiving the first system information, and further perform measurement based on the cell reselection information of the second cell, thereby implementing cell reselection.

The foregoing provides a method for sending the cell reselection information of the second cell. During actual application, the inter-frequency neighboring cell of the first cell may include only the second cell or include only a third cell, where the third cell is an inter-frequency neighboring cell of the first cell, and a spectrum of the third cell is greater than or equal to the threshold; or the inter-frequency neighboring cell of the first cell includes both the second cell and a third cell. The third cell is also referred to as a normal cell, a cell in a public network, a cell in a live network, a common cell, or the like. When the third cell is referred to as a normal cell, the second cell may be referred to as a dedicated cell, that is, the normal cell and the dedicated cell are a pair of corresponding concepts. The normal cell may be understood as a regular cell, a commonly used cell, or the like.

In embodiments of this application, the third cell may also be referred to as a second-type cell, the second-type cell is an inter-frequency neighboring cell of the first cell, and a spectrum of the second-type cell is greater than or equal to the threshold. This applies throughout and will not be repeated in other subsequent embodiments.

In embodiments of this application, two different implementations are provided for the cell reselection information of the second cell and cell reselection information of the third cell.

In an implementation, the cell reselection information of the second cell and the cell reselection information of the third cell are sent in the same piece of system information. The system information may be, for example, a system information block (system information block, SIB). For the implementation, there are the following three cases. Case 1: The inter-frequency neighboring cell of the first cell includes only the second cell and does not include the third cell. Case 2: The inter-frequency neighboring cell of the first cell includes only the third cell and does not include the second cell. Case 3: The inter-frequency neighboring cell of the first cell includes both the second cell and the third cell.

In another implementation, the cell reselection information of the second cell and the cell reselection information of the third cell are respectively sent in different pieces of system information. The system information may be, for example, a SIB, that is, the cell reselection information of the second cell and the cell reselection information of the third cell are sent in different SIBs. For the implementation, there are the following three cases. Case 1: The inter-frequency neighboring cell of the first cell includes only the second cell and does not include the third cell. Case 2: The inter-frequency neighboring cell of the first cell includes only the third cell and does not include the second cell. Case 3: The inter-frequency neighboring cell of the first cell includes both the second cell and the third cell.

The following separately describes the two implementations.

Implementation 1: The cell reselection information of the second cell and the cell reselection information of the third cell are sent in the same piece of system information.

For Implementation 1, the following separately provides descriptions for the three cases.

Case 1: The inter-frequency neighboring cell of the first cell includes only the second cell and does not include the third cell.

In an implementation, when the inter-frequency neighboring cell of the first cell includes only the second cell and does not include the third cell, the cell reselection information of the second cell may be sent by using the first system information according to the embodiment in FIG. 3, where the first system information does not carry the cell reselection information of the third cell.

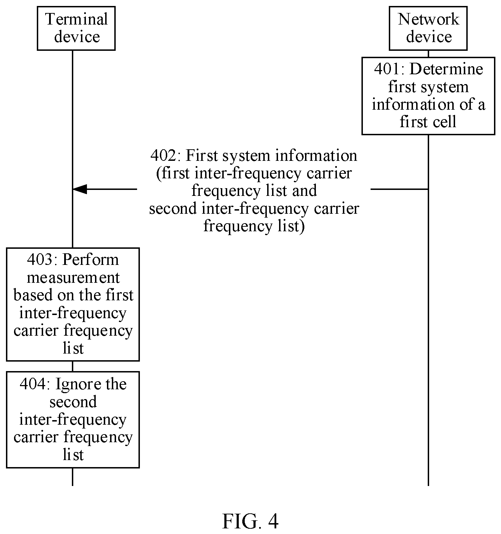

In another implementation, if the first system information in the embodiment in FIG. 3 reuses a SIB4 in conventional technologies, that is, the foregoing first inter-frequency carrier frequency list is added to the SIB4 in the conventional technologies, although the inter-frequency neighboring cell of the first cell does not include the third cell, the SIB4 still needs to carry cell reselection information of a second-type inter-frequency neighboring cell of the first cell. This is because, in the conventional technologies, the inter-frequency neighboring cell of the first cell includes only the third cell, and the second cell is not introduced. In the conventional technologies, a method for sending the SIB4 by the network device is: if the inter-frequency neighboring cell of the first cell does not include the third cell, not sending the SIB4; or if the inter-frequency neighboring cell of the first cell includes the third cell, sending the SIB4, where the SIB4 includes an inter-frequency carrier frequency list, the inter-frequency carrier frequency list includes at least one piece of inter-frequency carrier frequency information (InterFreqCarrierFreqInfo), each piece of inter-frequency carrier frequency information includes cell reselection information of one third cell, and each piece of inter-frequency carrier frequency information includes some mandatory fields. That is, it is specified in a current protocol that, provided that the SIB4 is sent, the SIB4 needs to carry some pieces of mandatory field information of the third cell, which is the inter-frequency neighboring cell of the first cell. Based on this, for a corresponding solution provided for Case 1 in Implementation 1 in embodiments of this application, refer to an embodiment in FIG. 4.

FIG. 4 is a schematic flowchart of a communication method according to an embodiment of this application. The method is a specific example of the embodiment in FIG. 3. The method includes the following steps.

Step 401: A network device determines first system information of a first cell.

The first system information includes a first inter-frequency carrier frequency list and a second inter-frequency carrier frequency list.

For descriptions of the first inter-frequency carrier frequency list, refer to the descriptions in step 301.

The second inter-frequency carrier frequency list includes cell reselection information of at least one third cell, a spectrum of the third cell is greater than or equal to a threshold, and the cell reselection information of the at least one third cell is invalid information. The third cell is also referred to as a normal cell, a cell in a public network, a cell in a live network, a common cell, or the like.

The following describes two implementations in which the network device determines the first system information.

Implementation 1: If an inter-frequency neighboring cell of the first cell includes at least one second cell, the network device determines the first inter-frequency carrier frequency list. If an inter-frequency neighboring cell of the first cell includes at least one second cell and does not include at least one third cell, the network device determines the second inter-frequency carrier frequency list. The network device determines the system information based on the first inter-frequency carrier frequency list and the second inter-frequency carrier frequency list.

Implementation 2: If an inter-frequency neighboring cell of the first cell includes at least one second cell, the network device determines the first inter-frequency carrier frequency list. If an inter-frequency neighboring cell of the first cell does not include at least one third cell, the network device determines the second inter-frequency carrier frequency list. The network device determines the system information based on the first inter-frequency carrier frequency list and the second inter-frequency carrier frequency list.

A difference between Implementation 1 and Implementation 2 is as follows: In Implementation 1, the network device needs to meet two conditions for determining the second inter-frequency carrier frequency list, where one of the conditions is that the inter-frequency neighboring cell of the first cell includes at least one second cell, and the other condition is that the inter-frequency neighboring cell of the first cell does not include at least one third cell. In Implementation 2, the network device needs to meet only one condition for determining the second inter-frequency carrier frequency list, where the condition is that the inter-frequency neighboring cell of the first cell does not include at least one third cell. Because the second inter-frequency carrier frequency list carries the invalid information, if the system information carries only the second inter-frequency carrier frequency list, and does not carry the first inter-frequency carrier frequency list, the system information is also invalid. For Implementation 1, because the sent system information does not carry only the second inter-frequency carrier frequency list, the system information is valid. Therefore, a waste of signaling can be reduced. For Implementation 2, because there is only one condition for determining whether to determine the second inter-frequency carrier frequency list, the implementation is simple and easy.

Step 402: The network device sends the first system information.

For example, the network device may broadcast, multicast, or unicast the first system information, or may send the first system information in another manner. A sending manner is not limited in this application.

For example, the network device sends the first system information in the first cell. The first cell is any cell belonging to the network device.

Step 403: A terminal device performs measurement based on the first inter-frequency carrier frequency list.

Step 403 is the same as step 303.

Step 404: The terminal device ignores the second inter-frequency carrier frequency list.

The terminal device obtains the second inter-frequency carrier frequency list from the first system information, and determines that the second inter-frequency carrier frequency list includes the invalid information.

The terminal device may ignore the second inter-frequency carrier frequency list, that is, the terminal device skips measurement based on the second inter-frequency carrier frequency list. Alternatively, the terminal device considers the second inter-frequency carrier frequency list as invalid, the terminal device does not process the second inter-frequency carrier frequency list/does not perform measurement for the second inter-frequency carrier frequency list, the terminal device does not store the second inter-frequency carrier frequency list, or the terminal device ignores the cell reselection information in the second inter-frequency carrier frequency list.

For example, that the terminal device skips measurement based on the second inter-frequency carrier frequency list may alternatively be skipping measurement based on inter-frequency carrier frequency information (InterFreqCarrierFreqInfo), in the second inter-frequency carrier frequency list, including the invalid information, that is, ignore the inter-frequency carrier frequency information, in the second inter-frequency carrier frequency list, including the invalid information.

It should be noted that, the terminal device described in the embodiment in FIG. 4 is an upgraded terminal device (also referred to as a new terminal device, or referred to as a terminal device that supports the second cell and optionally supports the third cell). The terminal device can parse both the first inter-frequency carrier frequency list and the second inter-frequency carrier frequency list. Therefore, after receiving the first system information, the terminal device performs measurement based on the first inter-frequency carrier frequency list (that is, step 403), and ignore the second inter-frequency carrier frequency list (that is, step 404).

A terminal device before upgrading (also referred to as an old terminal device or a previous terminal device, or referred to as a terminal device that supports the third cell but does not support the second cell) cannot parse the first inter-frequency carrier frequency list, but can parse the second inter-frequency carrier frequency list. Therefore, after receiving the first system information, the terminal device ignores the first inter-frequency carrier frequency list (that is, does not perform step 403) because the terminal device cannot parse the first inter-frequency carrier frequency list, and after parsing the second inter-frequency carrier frequency list, the terminal device ignores the second inter-frequency carrier frequency list (that is, step 404).

The following describes two different implementations in which the terminal device determines that the cell reselection information of the at least one third cell included in the second inter-frequency carrier frequency list is invalid information.

Implementation A: The terminal device determines, based on information about a first field in the cell reselection information of the at least one third cell included in the second inter-frequency carrier frequency list, that the cell reselection information of the at least one third cell in the second inter-frequency carrier frequency list is invalid information.

For example, the terminal device determines, based on information about a first field in cell reselection information of a third cell #1 included in the second inter-frequency carrier frequency list, that the cell reselection information of the third cell #1 in the second inter-frequency carrier frequency list is invalid information. Alternatively, the terminal device determines, based on information about a first field in cell reselection information of a third cell #1 included in the second inter-frequency carrier frequency list, that the cell reselection information of the third cell #1 in the second inter-frequency carrier frequency list is invalid information, and the terminal device determines, based on information about a first field in cell reselection information of a third cell #2 included in the second inter-frequency carrier frequency list, that the cell reselection information of the third cell #2 in the second inter-frequency carrier frequency list is invalid information.

For example, the first field may be at least one of the following: a band list, a downlink carrier frequency, an SSB subcarrier spacing, a minimum access quality level of a cell, a cell reselection delay, a high-priority reselection threshold, or a low-priority reselection threshold.

Based on Implementation A, when the information about the first field is a dummy (dummy) value, a fill value, a reserved value, a special value, or a specific value, also referred to as a dummy item, a fill item, a reserved item, or a specific item, the cell reselection information is invalid information.

For example, when a value of a band list in a piece of inter-frequency carrier frequency information in the second inter-frequency carrier frequency list is 1023, the terminal device determines that cell reselection information included in the inter-frequency carrier frequency information is invalid information, or determines that the inter-frequency carrier frequency information is invalid information.

For another example, when a value of a band list in a piece of inter-frequency carrier frequency information in the second inter-frequency carrier frequency list is any value in 1000 to 1023, the terminal device determines that cell reselection information included in the inter-frequency carrier frequency information is invalid information, or determines that the inter-frequency carrier frequency information is invalid information.

For another example, when a value of a band list in a piece of inter-frequency carrier frequency information in the second inter-frequency carrier frequency list is greater than 1000, the terminal device determines that cell reselection information included in the inter-frequency carrier frequency information is invalid information, or determines that the inter-frequency carrier frequency information is invalid information.

For another example, when a value of a downlink carrier frequency in a piece of inter-frequency carrier frequency information in the second inter-frequency carrier frequency list does not have a corresponding global synchronization channel number (Global Synchronization Channel Number, GSCN), the terminal device determines that cell reselection information included in the inter-frequency carrier frequency information is invalid information, or determines that the inter-frequency carrier frequency information is invalid information.

For another example, when a value of a downlink carrier frequency in a piece of inter-frequency carrier frequency information in the second inter-frequency carrier frequency list is less than a threshold, is greater than a threshold, or falls within a range, the terminal device determines that cell reselection information included in the inter-frequency carrier frequency information is invalid information, or determines that the inter-frequency carrier frequency information is invalid information. For example, if the value of the downlink carrier frequency is less than 250 MHz or greater than 99988.32 MHz, the terminal device determines that the cell reselection information included in the inter-frequency carrier frequency information is invalid information, or determines that the inter-frequency carrier frequency information is invalid information.

Implementation B: When determining that the cell reselection information of the at least one third cell in the second inter-frequency carrier frequency list includes information about the first cell, the terminal device determines that the cell reselection information of the at least one third cell in the second inter-frequency carrier frequency list is invalid information.

For example, the terminal device determines, based on information about a first cell in cell reselection information of a third cell #1 included in the second inter-frequency carrier frequency list, that the cell reselection information of the third cell #1 in the second inter-frequency carrier frequency list is invalid information. Alternatively, the terminal device determines, based on information about a first cell in cell reselection information of a third cell #1 included in the second inter-frequency carrier frequency list, that the cell reselection information of the third cell #1 in the second inter-frequency carrier frequency list is invalid information, and the terminal device determines, based on information about a first cell in cell reselection information of a third cell #2 included in the second inter-frequency carrier frequency list, that the cell reselection information of the third cell #2 in the second inter-frequency carrier frequency list is invalid information.

When determining that the cell reselection information of the at least one third cell in the second inter-frequency carrier frequency list includes the information about the first cell, the terminal device determines that the second inter-frequency carrier frequency list includes information about an intra-frequency cell of the first cell instead of cell reselection information of the inter-frequency neighboring cell of the first cell, thereby determining that the cell reselection information of the at least one third cell in the second inter-frequency carrier frequency list is invalid information.

In the embodiment in FIG. 4, the same piece of system information (namely, the first system information) may carry the first inter-frequency carrier frequency list and the second inter-frequency carrier frequency list, and the cell reselection information of the at least one third cell in the second inter-frequency carrier frequency list is invalid information. The terminal device may identify that the cell reselection information of the at least one third cell in the second inter-frequency carrier frequency list is invalid information, and therefore, skips measurement based on the second inter-frequency carrier frequency list and performs measurement based only on the first inter-frequency carrier frequency list. When the first system information is a SIB4, in this solution, compatibility with the SIB4 in the conventional technologies is implemented. The existing SIB4 carries the second inter-frequency carrier frequency list that includes invalid information, so that existing UE or UE that does not support the second cell skips measurement based on the second inter-frequency carrier frequency list, thereby avoiding a waste of signaling or other errors caused by performing measurement due to incorrect interpretation of the second inter-frequency carrier frequency list. In addition, there is no need to introduce an additional SIB for sending the first inter-frequency carrier frequency list, thereby reducing signaling overhead.

Case 2: The inter-frequency neighboring cell of the first cell includes only the third cell and does not include the second cell.

For Case 2 in Implementation 1, if the inter-frequency neighboring cell of the first cell includes only the third cell and does not include the second cell, a SIB4 may be sent according to a method in conventional technologies, where the SIB4 includes one inter-frequency carrier frequency list, the inter-frequency carrier frequency list includes cell reselection information of at least one third cell, and the cell reselection information is valid information. For a specific implementation, refer to the conventional technologies. Details are not described herein.

For Case 2 in Implementation 1, both a terminal device before upgrading (also referred to as an old terminal device or a previous terminal device, or referred to as a terminal device that supports the third cell but does not support the second cell) and an upgraded terminal device (also referred to as a new terminal device, or referred to as a terminal device that supports the second cell and optionally supports the third cell) can parse an inter-frequency carrier frequency list in the SIB4. Therefore, after receiving the SIB4 and parsing or reading the inter-frequency carrier frequency list in the SIB4, the terminal device performs measurement based on the inter-frequency carrier frequency list.

Case 3: The inter-frequency neighboring cell of the first cell includes both the second cell and the third cell.

For Case 3 in Implementation 1, if the first cell has both the second cell and the third cell, the first inter-frequency carrier frequency list and a third inter-frequency carrier frequency list may be carried in the same piece of system information (for example, the first system information, where the first system information may be, for example, a SIB4). The first inter-frequency carrier frequency list includes the cell reselection information of the at least one second cell, and the spectrum of the second cell is less than the threshold. The cell reselection information of the at least one second cell included in the first inter-frequency carrier frequency list is valid information. The third inter-frequency carrier frequency list includes cell reselection information of at least one third cell, and a spectrum of the third cell is greater than or equal to the threshold. The cell reselection information of the at least one third cell included in the third inter-frequency carrier frequency list is valid information.

Based on Case 3, a terminal device before upgrading (also referred to as an old terminal device or a previous terminal device, or referred to as a terminal device that supports the third cell but does not support the second cell) cannot parse (or does not support parsing) the first inter-frequency carrier frequency list, but can parse (or supports parsing) the third inter-frequency carrier frequency list. The terminal device receives the first system information, ignores or discards the first inter-frequency carrier frequency list in the first system information, parses or reads the third inter-frequency carrier frequency list in the first system information, and performs measurement based on the third inter-frequency carrier frequency list.

An upgraded terminal device (also referred to as a new terminal device, or referred to as a terminal device that supports both the second cell and the third cell) can parse (or supports parsing) the first inter-frequency carrier frequency list, and optionally can further parse (or supports parsing) the third inter-frequency carrier frequency list. The terminal device receives the first system information, parses or reads the first inter-frequency carrier frequency list in the first system information, performs measurement based on the first inter-frequency carrier frequency list, parses or reads the third inter-frequency carrier frequency list in the first system information, and performs measurement based on the third inter-frequency carrier frequency list.

The foregoing descriptions are specific implementations for the three different cases in which the cell reselection information of the second cell and the cell reselection information of the third cell are sent in the same piece of system information.

Implementation 2: The cell reselection information of the second cell and the cell reselection information of the third cell are respectively sent in different pieces of system information.

For Implementation 2, system information used to send the cell reselection information of the second cell of the first cell is referred to as first system information, and system information used to send the cell reselection information of the third cell of the first cell is referred to as second system information.

Specifically, the first system information includes a first inter-frequency carrier frequency list, the first inter-frequency carrier frequency list includes cell reselection information of at least one second cell, a spectrum of the second cell is less than the threshold, and cell reselection information of the at least one second cell included in the first inter-frequency carrier frequency list is valid information. The second system information includes a third inter-frequency carrier frequency list, the third inter-frequency carrier frequency list includes cell reselection information of at least one third cell, and a spectrum of the third cell is greater than or equal to the threshold. The cell reselection information of the at least one third cell included in the third inter-frequency carrier frequency list is valid information.

The first system information does not include the third inter-frequency carrier frequency list, and the second system information does not include the first inter-frequency carrier frequency list.

The first system information may be referred to as a SIBx, and a value of x may be different from 1 to 24 in conventional technologies. For example, the SIBx may be specifically a SIB25, a SIB26, a SIB27, a SIB28, or a SIB29. The second system information is a SIB4 in the conventional technologies.

For Implementation 2, the following separately provides descriptions for the three cases.

Case 1: The inter-frequency neighboring cell of the first cell includes only the second cell and does not include the third cell.

For Case 1 in Implementation 2, if the inter-frequency neighboring cell of the first cell includes only the second cell and does not include the third cell, the network device only needs to send the first system information of the first cell, and does not need to send the second system information of the first cell. For content of the first system information and the second system information, refer to the foregoing descriptions.

For a specific implementation in which the network device sends the first system information of the first cell, refer to the embodiment in FIG. 3.

Based on Case 1, a terminal device before upgrading (also referred to as an old terminal device or a previous terminal device, or referred to as a terminal device that supports the third cell but does not support the second cell) cannot parse (or does not support parsing) the first inter-frequency carrier frequency list, but can parse (or supports parsing) the third inter-frequency carrier frequency list. The terminal device does not receive or parse the first inter-frequency carrier frequency list in the first system information, or receives the first system information but does not parse, ignores, or discards the first system information.

An upgraded terminal device (also referred to as a new terminal device, or referred to as a terminal device that supports both the second cell and the third cell) can parse (or supports parsing) the first inter-frequency carrier frequency list, and optionally can further parse (or supports parsing) the third inter-frequency carrier frequency list. The terminal device receives the first system information, parses or reads the first inter-frequency carrier frequency list in the first system information, and performs measurement based on the first inter-frequency carrier frequency list.

Case 2: The inter-frequency neighboring cell of the first cell includes only the third cell and does not include the second cell.

For Case 2 in Implementation 2, if the inter-frequency neighboring cell of the first cell includes only the third cell and does not include the second cell, the network device only needs to send the second system information of the first cell, and does not need to send the first system information of the first cell. For content of the first system information and the second system information, refer to the foregoing descriptions.

For a specific implementation in which the network device sends the second system information of the first cell, refer to the conventional technologies.

Based on Case 2, a terminal device before upgrading (also referred to as an old terminal device or a previous terminal device, or referred to as a terminal device that supports the third cell but does not support the second cell) cannot parse (or does not support parsing) the first inter-frequency carrier frequency list, but can parse (or supports parsing) the third inter-frequency carrier frequency list. The terminal device receives the second system information, reads or parses the third inter-frequency carrier frequency list in the second system information, and performs measurement based on the third inter-frequency carrier frequency list.

An upgraded terminal device (also referred to as a new terminal device, or referred to as a terminal device that supports both the second cell and the third cell) can parse (or supports parsing) the first inter-frequency carrier frequency list, and optionally can further parse (or supports parsing) the third inter-frequency carrier frequency list. The terminal device receives the second system information, reads or parses the third inter-frequency carrier frequency list in the second system information, and performs measurement based on the third inter-frequency carrier frequency list.

Case 3: The first cell has both the second cell and the third cell.

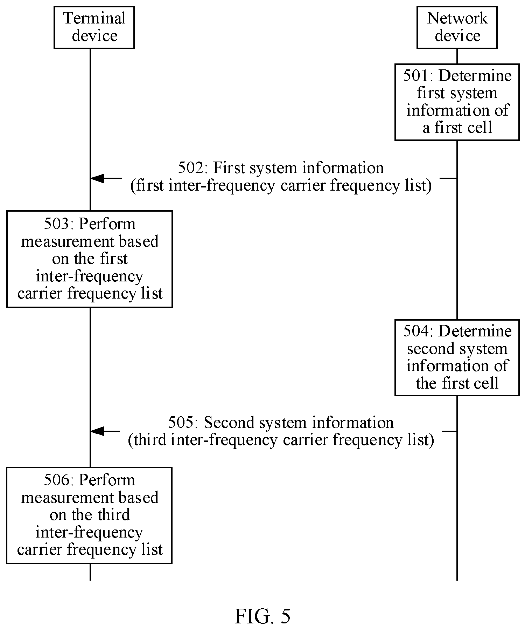

For Case 3 in Implementation 2, if the first cell has both the second cell and the third cell, the network device needs to send both the first system information of the first cell and the second system information of the first cell. Based on this, for a corresponding solution provided for Case 3 in Implementation 2 in embodiments of this application, refer to an embodiment in FIG. 5.

Based on Case 3, a terminal device before upgrading (also referred to as an old terminal device or a previous terminal device, or referred to as a terminal device that supports the third cell but does not support the second cell) cannot parse (or does not support parsing) the first inter-frequency carrier frequency list, but can parse (or supports parsing) the third inter-frequency carrier frequency list. The terminal device receives the first system information, and ignores, discards, or does not parse the first inter-frequency carrier frequency list in the first system information. Alternatively, the terminal device does not receive the first system information. The terminal device receives the second system information, reads or parses the third inter-frequency carrier frequency list in the second system information, and performs measurement based on the third inter-frequency carrier frequency list.

An upgraded terminal device (also referred to as a new terminal device, or referred to as a terminal device that supports both the second cell and the third cell) can parse (or supports parsing) the first inter-frequency carrier frequency list, and optionally can further parse (or supports parsing) the third inter-frequency carrier frequency list. The terminal device receives the first system information, reads or parses the first inter-frequency carrier frequency list in the first system information, and performs measurement based on the first inter-frequency carrier frequency list. The terminal device receives the second system information, reads or parses the third inter-frequency carrier frequency list in the second system information, and performs measurement based on the third inter-frequency carrier frequency list. For specific implementation content of the terminal device, refer to the following descriptions of the embodiment in FIG. 5.

FIG. 5 is a schematic flowchart of a communication method according to an embodiment of this application. The method is a specific example of the embodiment in FIG. 3. The method includes the following steps.

Step 501 to step 503 are the same as step 301 to step 303 in the embodiment in FIG. 3.

Step 504: A network device determines second system information of a first cell.

The second system information includes a third inter-frequency carrier frequency list, the third inter-frequency carrier frequency list includes cell reselection information of at least one third cell, the third cell is an inter-frequency neighboring cell of the first cell, and a spectrum of the third cell is greater than or equal to a threshold. The cell reselection information of the at least one third cell included in the third inter-frequency carrier frequency list is valid information.

Step 505: The network device sends the second system information.

For example, the network device may broadcast, multicast, or unicast the first system information.

The second system information is a SIB4 in the conventional technologies.

For example, the network device sends the second system information in the first cell.

Step 506: A terminal device performs measurement based on the third inter-frequency carrier frequency list.

The terminal device receives the second system information of the first cell, obtains the third inter-frequency carrier frequency list from the second system information, and performs measurement based on cell reselection information of each third cell in the third inter-frequency carrier frequency list. If the terminal device obtains, through measurement, an inter-frequency neighboring cell that meets a condition, the terminal device may perform reselection to the inter-frequency neighboring cell.

It should be noted that, a time sequence relationship between any one of step 501 to step 503 and any one of step 504 to step 506 is not limited. For example, step 504 may be performed before or after any one of step 501 to step 503, step 505 may be performed before or after any one of step 501 to step 503, and step 506 may be performed before or after any one of step 501 to step 503.

In the embodiment in FIG. 5, step 503 and step 506 are performed by the same terminal device. In another implementation, step 503 and step 506 may be respectively performed by different terminal devices. For example, a terminal device 1 receives the first system information, and further performs measurement based on a first inter-frequency carrier frequency list in the first system information; and a terminal device 2 receives the second system information, and further performs measurement based on the third inter-frequency carrier frequency list in the second system information.

In the embodiment in FIG. 5, the first inter-frequency carrier frequency list and the third inter-frequency carrier frequency list are respectively carried in different pieces of system information, and the terminal device may perform measurement based on the first inter-frequency carrier frequency list and perform measurement based on the third inter-frequency carrier frequency list. When the two pieces of system information used to send the first inter-frequency carrier frequency list and the third inter-frequency carrier frequency list are both SIBs, in this solution, the SIB4 in the conventional technologies may not be changed. The SIB4 is used to send the third inter-frequency carrier frequency list, and only another SIB needs to be introduced for sending the first inter-frequency carrier frequency list. Therefore, cell reselection information of inter-frequency neighboring cells of different types is sent in different SIBs, thereby avoiding incorrect identification by the terminal device, and helping the terminal device accurately identify the cell reselection information of inter-frequency neighboring cells of different types.

In one of the foregoing solutions, one piece of system information carries two inter-frequency carrier frequency lists, to be specific, the first inter-frequency carrier frequency list and the second inter-frequency carrier frequency list, where the first inter-frequency carrier frequency list corresponds to at least one first cell, and the second inter-frequency carrier frequency list corresponds to at least two first cells. In another one of the foregoing solutions, two pieces of system information each carry one inter-frequency carrier frequency list. Specifically, the first system information carries the first inter-frequency carrier frequency list, and the second system information carries the second inter-frequency carrier frequency list, where the first inter-frequency carrier frequency list corresponds to at least one first cell, and the second inter-frequency carrier frequency list corresponds to at least two first cells.

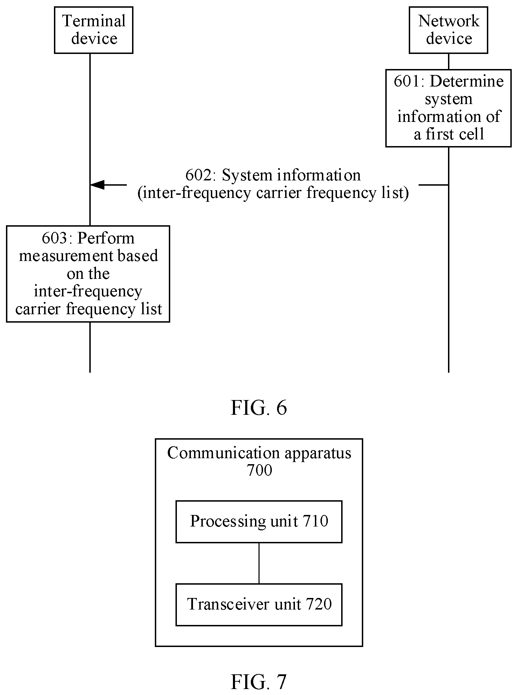

In another solution, in an embodiment of this application, one piece of system information may carry one inter-frequency carrier frequency list. The inter-frequency carrier frequency list includes one or more pieces of inter-frequency carrier frequency information. Each piece of inter-frequency carrier frequency information includes inter-frequency carrier frequency information of one inter-frequency neighboring cell of the first cell. The inter-frequency neighboring cell may be the second cell defined above or the third cell defined above. That is, in this embodiment, inter-frequency carrier frequency information of all neighboring cells/any neighboring cell of the first cell is carried by using one inter-frequency carrier frequency list. In addition, the second cell and the third cell may be distinguished by using values of band lists in the inter-frequency carrier frequency information. The following describes this implementation with reference to FIG. 6.

FIG. 6 is a schematic flowchart of a communication method according to an embodiment of this application. The method is performed by a network device or a module (for example, a chip) in a network device, and a terminal device or a module (for example, a chip) in a terminal device. The following uses an example in which the network device and the terminal device performs the method for description.

The method includes the following steps.

Step 601: The network device determines system information of a first cell.

The system information includes an inter-frequency carrier frequency list, and the inter-frequency carrier frequency list includes cell reselection information of at least one second cell and/or cell reselection information of at least one third cell. For definitions of the second cell and the third cell, refer to the descriptions in the foregoing embodiments.

For example, the inter-frequency carrier frequency list includes at least two pieces of inter-frequency carrier frequency information, where a part of the inter-frequency carrier frequency information is inter-frequency carrier frequency information of the second cell, and the other part of the inter-frequency carrier frequency information is inter-frequency carrier frequency information of the third cell. Optionally, a value of a band in the inter-frequency carrier frequency information of the second cell is greater than a first threshold, and a value of a band in the inter-frequency carrier frequency information of the third cell is less than or equal to the first threshold.

For example, the inter-frequency carrier frequency list includes at least one piece of inter-frequency carrier frequency information, where the inter-frequency carrier frequency information is the inter-frequency carrier frequency information of the second cell or the inter-frequency carrier frequency information of the third cell. Optionally, a value of a band in the inter-frequency carrier frequency information of the second cell is greater than a first threshold, and a value of a band in the inter-frequency carrier frequency information of the third cell is less than or equal to the first threshold.

For example, values of band lists in an existing protocol are all less than 1000 (where a maximum value is 263), and bands of the second cell currently involve only bands n100, n106, n26, n28, and n85. In an implementation, the value of the band of the second cell may be increased to more than 1000 by adding an offset, to distinguish the second cell from the third cell by using the value of the band. 1000 is an example of the first threshold. For example, if the offset is 1000, values of bands n100, n106, n26, n28, and n85 in the inter-frequency carrier frequency information are set to 1110, 1106, 1026, 1028, and 1085. In another implementation, different offsets are added for different band values, so that the values of all bands are greater than or equal to the first threshold (for example, 1000). For example, n100 is increased by 901, n106 is increased by 896, n26 is increased by 977, n28 is increased by 976, and n85 is increased by 920, to obtain values 1001, 1002, 1003, 1004, and 1005 of the bands in the inter-frequency carrier frequency information respectively.

It may be understood that, there is a correspondence between a band of the second cell and band information in the inter-frequency carrier frequency information. For example, the band of the second cell is n100, and a corresponding value of the band in the inter-frequency carrier frequency information is 1100. The rest may be deduced by analogy. The network device determines the system information of the first cell based on the correspondence.

Based on this example, if a value of a band in a piece of inter-frequency carrier frequency information is greater than or equal to 1000, the inter-frequency carrier frequency information is the inter-frequency carrier frequency information of the second cell; and if a value of a band in a piece of inter-frequency carrier frequency information is less than 1000, the inter-frequency carrier frequency information is the inter-frequency carrier frequency information of the third cell.

Step 602: The network device sends the system information.

For example, the network device may broadcast, multicast, or unicast the system information, or may send the system information in another manner. A sending manner is not limited in this application.

For example, the network device sends the system information in the first cell. The cell is any cell belonging to the network device.

Step 603: The terminal device performs measurement based on the inter-frequency carrier frequency list.

A terminal device before upgrading (also referred to as an old terminal device or a previous terminal device, or referred to as a terminal device that supports the third cell but does not support the second cell) cannot parse (or does not support parsing) the inter-frequency carrier frequency information of the second cell in the inter-frequency carrier frequency list, but can parse (or support parsing) the inter-frequency carrier frequency information of the third cell in the inter-frequency carrier frequency list. This is because the terminal device does not support a value of a band which is greater than or equal to 1000. The terminal device receives the system information; ignores or discards the inter-frequency carrier frequency information of the second cell in the system information, and/or parses or reads the inter-frequency carrier frequency information of the third cell in the system information; and performs measurement based on the inter-frequency carrier frequency information of the third cell.

An upgraded terminal device (also referred to as a new terminal device or a dedicated terminal device/specific terminal device, or referred to as a terminal device that supports the second cell and also supports the third cell), the terminal device can parse (or supports parsing) the inter-frequency carrier frequency information of the second cell in the inter-frequency carrier frequency list, and optionally can parse (or supports parsing) the inter-frequency carrier frequency information of the third cell in the inter-frequency carrier frequency list. The terminal device receives the system information, parses or reads the inter-frequency carrier frequency information of the second cell in the inter-frequency carrier frequency list in the system information, and performs measurement based on the inter-frequency carrier frequency information of the second cell in the inter-frequency carrier frequency list. After reading the value of the band in the inter-frequency carrier frequency information of the second cell, the terminal device further subtracts an offset from the value of the band, to obtain an actual value of the band. For example, the offset in the foregoing example is 1000. If 1100 is obtained, it is determined that a corresponding band is actually n100; and if 1106 is obtained, it is determined that a corresponding band is actually n106. It may be understood that, the terminal device determines band information of the second cell based on the correspondence. Optionally, the terminal device may further parse or read the inter-frequency carrier frequency information of the third cell in the inter-frequency carrier frequency list in the system information, and performs measurement based on the inter-frequency carrier frequency information of the third cell in the inter-frequency carrier frequency list.

It may be understood that, to implement the functions in the foregoing embodiments, the terminal device or the network device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware in a manner of hardware driven by computer software depends on particular application scenarios and design constraints of the technical solutions.

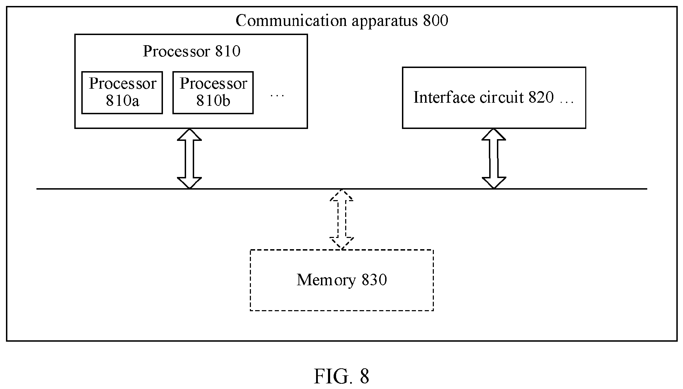

FIG. 7 and FIG. 8 each are a diagram of a possible structure of a communication apparatus according to an embodiment of this application. The communication apparatus may be configured to implement the function of the terminal device or the network device in the foregoing method embodiments. Therefore, beneficial effects of the foregoing method embodiments can also be implemented. In embodiments of this application, the communication apparatus may be the terminal device or the network device, or may be a module (for example, a chip) used in the terminal device or the network device.

A communication apparatus 700 shown in FIG. 7 includes a processing unit 710 and a transceiver unit 720. The communication apparatus 700 is configured to implement the function of the terminal device or the network device in the foregoing method embodiments.

When the communication apparatus 700 is configured to implement the function of the terminal device in the foregoing method embodiments, the transceiver unit 720 is configured to receive first system information of a first cell, where the first system information includes a first inter-frequency carrier frequency list, the first inter-frequency carrier frequency list includes cell reselection information of at least one second cell, the second cell is an inter-frequency neighboring cell of the first cell, and a spectrum of the second cell is less than a threshold; and the processing unit 710 is configured to perform measurement based on the first inter-frequency carrier frequency list.

In a possible implementation, the first system information further includes a second inter-frequency carrier frequency list, the second inter-frequency carrier frequency list includes cell reselection information of at least one third cell, the third cell is an inter-frequency neighboring cell of the first cell, a spectrum of the third cell is greater than or equal to the threshold, and the cell reselection information of the at least one third cell is invalid information.

In a possible implementation, the processing unit 710 is further configured to: skip measurement based on the second inter-frequency carrier frequency list; or ignore the second inter-frequency carrier frequency list.

In a possible implementation, the processing unit 710 is further configured to determine, based on information about a first field in the cell reselection information of the at least one third cell, that the cell reselection information of the at least one third cell is invalid information.

In a possible implementation, the first field includes one or more of the following fields: a band list, a downlink carrier frequency, an SSB subcarrier spacing, a minimum access quality level of a cell, a cell reselection delay, a high-priority reselection threshold, or a low-priority reselection threshold.

In a possible implementation, the processing unit 710 is further configured to determine, if it is determined that the cell reselection information of the at least one third cell includes information about the first cell, that the cell reselection information of the at least one third cell is invalid information.

In a possible implementation, the transceiver unit 720 is further configured to receive second system information of the first cell, where the second system information includes a third inter-frequency carrier frequency list, the third inter-frequency carrier frequency list includes cell reselection information of at least one third cell, and a spectrum of the third cell is greater than or equal to the threshold; and the processing unit 710 is further configured to perform measurement based on the third inter-frequency carrier frequency list.

In a possible implementation, the threshold is 5 MHz.

In a possible implementation, the first system information is a SIB4.

When the communication apparatus 700 is configured to implement the function of the network device in the foregoing method embodiments, the processing unit 710 is configured to determine first system information of a first cell, where the first system information includes a first inter-frequency carrier frequency list, the first inter-frequency carrier frequency list includes cell reselection information of at least one second cell, the second cell is an inter-frequency neighboring cell of the first cell, and a spectrum of the second cell is less than a threshold; and the transceiver unit 720 is configured to send the first system information.

In a possible implementation, the first system information further includes a second inter-frequency carrier frequency list, the second inter-frequency carrier frequency list includes cell reselection information of at least one third cell, the third cell is an inter-frequency neighboring cell of the first cell, a spectrum of the third cell is greater than or equal to the threshold, and the cell reselection information of the at least one third cell is invalid information.

In a possible implementation, the cell reselection information of the at least one third cell includes information about a first field, and the information about the first field indicates that the cell reselection information of the third cell is invalid information.

In a possible implementation, the first field includes one or more of the following fields: a band list, a downlink carrier frequency, an SSB subcarrier spacing, a minimum access quality level of a cell, a cell reselection delay, a high-priority reselection threshold, or a low-priority reselection threshold.

In a possible implementation, the invalid information includes information about the first cell.

In a possible implementation, the processing unit 710 is further configured to determine second system information of the first cell, where the second system information includes a third inter-frequency carrier frequency list, the third inter-frequency carrier frequency list includes cell reselection information of at least one third cell, and a spectrum of the third cell is greater than or equal to the threshold; and the transceiver unit 720 is further configured to send the second system information.

In a possible implementation, the threshold is 5 MHz.

In a possible implementation, the first system information is a SIB4.

For more detailed descriptions about the foregoing processing unit 710 and transceiver unit 720, directly refer to the related descriptions in the foregoing method embodiments. Details are not described herein again.

A communication apparatus 800 shown in FIG. 8 includes a processor 810 and an interface circuit 820. For example, the processor 810 in the communication apparatus 800 may include one or more processors. For example, an example in FIG. 8 includes a processor 810a, a processor 810b, and the like. The processor 810 and the interface circuit 820 are coupled to each other. It may be understood that, the interface circuit 820 may be a transceiver or an input/output interface. Optionally, the communication apparatus 800 may further include a memory 830 configured to store instructions to be executed by the processor 810, store input data required by the processor 810 to run the instructions, or store data generated after the processor 810 runs the instructions.

When the communication apparatus 800 is configured to implement the foregoing method embodiments, the processor 810 is configured to implement a function of the foregoing processing unit 710, and the interface circuit 820 is configured to implement a function of the foregoing transceiver unit 720.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, may be any conventional processor, or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, and a compact disc read-only memory (compact disc read-only memory, CD-ROM) or any other form of storage medium well known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in the terminal device or the network device. Certainly, the processor and the storage medium may also exist in an access network device or a terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. The computer program (computer program) is a set of instructions that indicate each step of an electronic computer or another device having a message processing capability, is usually written in a program design language, and is run in a target system structure. When the computer programs or instructions are loaded and executed on a computer, procedures or functions in embodiments of this application are all or partially executed. The computer may be a general-purpose computer, a dedicated computer, a computer network, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. In the text descriptions of this application, the character "/" represents an "or" relationship between the associated objects. In a formula in this application, the character "/" represents a "division" relationship between the associated objects.

It may be understood that, various numbers in embodiments of this application are merely for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving first system information of a first cell, wherein the first system information comprises a first inter-frequency carrier frequency list, the first inter-frequency carrier frequency list comprises cell reselection information of at least one second cell, the second cell is an inter-frequency neighboring cell of the first cell, and a spectrum of the second cell is less than a threshold; and
performing measurement based on the first inter-frequency carrier frequency list.

2. The method according to claim 1, wherein the first system information further comprises a second inter-frequency carrier frequency list, the second inter-frequency carrier frequency list comprises cell reselection information of at least one third cell, the third cell is an inter-frequency neighboring cell of the first cell, a spectrum of the third cell is greater than or equal to the threshold, and the cell reselection information of the at least one third cell is invalid information.

3. The method according to claim 2, wherein the method further comprises:
skipping measurement based on the second inter-frequency carrier frequency list; or
ignoring the second inter-frequency carrier frequency list.

4. The method according to claim 2 or 3, wherein the method further comprises:
determining, based on information about a first field in the cell reselection information of the at least one third cell, that the cell reselection information of the at least one third cell is invalid information.

5. The method according to claim 4, wherein the first field comprises one or more of the following fields:
a band list, a downlink carrier frequency, a synchronization signal block SSB subcarrier spacing, a minimum access quality level of a cell, a cell reselection delay, a high-priority reselection threshold, or a low-priority reselection threshold.

6. The method according to claim 2 or 3, wherein the method further comprises:
determining, when it is determined that the cell reselection information of the at least one third cell comprises information about the first cell, that the cell reselection information of the at least one third cell is invalid information.

7. The method according to claim 1, wherein the method further comprises:
receiving second system information of the first cell, wherein the second system information comprises a third inter-frequency carrier frequency list, the third inter-frequency carrier frequency list comprises cell reselection information of at least one third cell, and a spectrum of the third cell is greater than or equal to the threshold; and
performing measurement based on the third inter-frequency carrier frequency list.

8. The method according to any one of claims 1 to 7, wherein the threshold is 5 MHz.

9. The method according to any one of claims 1 to 8, wherein the first system information is a SIB4.

10. A communication method, wherein the method comprises:
determining first system information of a first cell, wherein the first system information comprises a first inter-frequency carrier frequency list, the first inter-frequency carrier frequency list comprises cell reselection information of at least one second cell, the second cell is an inter-frequency neighboring cell of the first cell, and a spectrum of the second cell is less than a threshold; and
sending the first system information.

11. The method according to claim 10, wherein the first system information further comprises a second inter-frequency carrier frequency list, the second inter-frequency carrier frequency list comprises cell reselection information of at least one third cell, the third cell is an inter-frequency neighboring cell of the first cell, a spectrum of the third cell is greater than or equal to the threshold, and the cell reselection information of the at least one third cell is invalid information.

12. The method according to claim 11, wherein the cell reselection information of the at least one third cell comprises information about a first field, and the information about the first field indicates that the cell reselection information of the third cell is invalid information.

13. The method according to claim 12, wherein the first field comprises one or more of the following fields:
a band list, a downlink carrier frequency, a synchronization signal block SSB subcarrier spacing, a minimum access quality level of a cell, a cell reselection delay, a high-priority reselection threshold, or a low-priority reselection threshold.

14. The method according to claim 11, wherein the invalid information comprises information about the first cell.

15. The method according to claim 10, wherein the method further comprises:
determining second system information of the first cell, wherein the second system information comprises a third inter-frequency carrier frequency list, the third inter-frequency carrier frequency list comprises cell reselection information of at least one third cell, and a spectrum of the third cell is greater than or equal to the threshold; and
sending the second system information.

16. The method according to any one of claims 10 to 15, wherein the threshold is 5 MHz.

17. The method according to any one of claims 10 to 16, wherein the first system information is a SIB4.

18. A communication apparatus, comprising one or more processors and one or more interface circuits, wherein the processor is configured to communicate with another apparatus by using the interface circuit, and perform the method according to any one of claims 1 to 9, or to perform the method according to any one of claims 10 to 17.

19. A computer program product, wherein the computer program product comprises instructions, and when the instructions are run on a processor, the method according to any one of claims 1 to 9 or the method according to any one of claims 10 to 17 is performed.

20. A computer-readable storage medium, wherein the storage medium stores a computer program or instructions, and when the computer program or the instructions are executed by a communication apparatus, the method according to any one of claims 1 to 9 is implemented, or the method according to any one of claims 10 to 17 is implemented.

21. A chip or a chip system, comprising one or more processors, wherein the processor is configured to perform the method according to any one of claims 1 to 9, or to perform the method according to any one of claims 10 to 17.

22. A communication system, comprising a terminal device configured to perform the method according to any one of claims 1 to 9, and a network device configured to perform the method according to any one of claims 10 to 17.
